# FASCICULE DE BREVET EUROPEEN

(11) **EP 0 693 309 B1**
(45) Date de publication et mention de la délivrance du brevet: **01.09.1999**
(21) Numéro de dépôt: 95401678.8
(22) Date de dépôt: 12.07.1995
(51) Int. Cl.: B01D 53/06

(54) **Procédé de séparation d'azote d'un mélange gazeux par adsorption**
Verfahren zur Trennung von Stickstoff von einer Gasmischung durch Adsorption
Process for nitrogen separation from a gaseous mixture by adsorption

(30) Priorité: 18.07.1994 FR 9408822
(43) Date de publication de la demande: 24.01.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Vigor, Xavier, F-75015 Paris (FR); Petit, Pierre, F-78530 Buc (FR); Moreau, Serge, F-78148 Velizy-Villacoublay (FR); Sardan, Bernard, F-78370 Plaisir (FR)
(74) Mandataire: Le Moenner, Gabriel

(56) Documents cités:
- EP-A- 0 297 542
- EP-A- 0 461 478
- EP-A- 0 591 919
- WO-A-93/20925
- US-A- 3 140 933
- US-A- 5 174 979
- US-A- 5 268 023

## Description

La présente invention concerne un procédé de séparation d'azote d'un mélange gazeux, tel l'air, par adsorption sélective de l'azote sur une masse d'adsorbant, avec variations cycliques de pression. Plus particulièrement, l'invention concerne un procédé de séparation d'azote d'un mélange gazeux au moyen d'un adsorbeur rotatif.

Les procédés de séparation par adsorption d'un gaz d'un mélange gazeux le contenant par adsorption de ce gaz sont bien connus. Ces procédés mettent en oeuvre une variation cyclique de pression et sont généralement désignés comme des procédés PSA (pour "Pressure Swing Adsorption"). Ces procédés sont notamment utilisés pour séparer l'azote de l'air, en vue de la récupération d'autres gaz de l'air, principalement l'oxygène. Ce type de procédés cycliques, comporte deux phases principales. Une première phase consiste en une adsorption sélective d'un gaz du mélange gazeux sur une masse d'adsorbant et passage des autres gaz au travers de cette masse. La phase d'adsorption est réalisée à une pression haute. La deuxième phase consiste en une désorption du gaz préalablement adsorbé. Cette phase est réalisée à une pression relativement plus basse. Lorsque la pression basse est inférieure à la pression atmosphérique, on parle alors plus généralement de procédé VSA (pour "Vacuum Swing Adsorption"). Toutefois, pour des raisons de commodité, on désignera ci-après par "procédé PSA", aussi bien les procédés PSA proprement dits que les procédés VSA.

Les phases d'adsorption et de désorption sont répétées cycliquement en vue du traitement en continu d'un flux du mélange gazeux. De nombreuses variantes de ce procédé comprenant des phases additionnelles, ont été développées, et sont bien connues de l'homme du métier. A cet égard, on peut par exemple se référer aux demandes de brevet EP-A-350.373; WO-A-91/12874; EP-A-108.005; FR-A-2.579.484; FR-A-2.612.083 et FR-A-2.624.759.

Classiquement, les procédés PSA sont mis en oeuvre au moyen de dispositifs comportant différentes masses d'adsorbants agencées chacune dans une pluralité de bidons, avec ou sans capacité auxiliaire.

Les adsorbants généralement utilisés consistent en des tamis moléculaires ou zéolithes du type zéolithe 13X, 5A et 10X ou mordénites.

D'autres adsorbants ont été décrits comme pouvant être utilisés dans un procédé PSA. Ainsi, le brevet US-A-3.140.933 et la demande de brevet EP-A-297.542 préconisent l'utilisation de zéolithes X, c'est-à-dire des zéolithes dont le rapport Si/Al est compris entre 1 et 1,5, fortement échangées au lithium. Ces zéolithes permettent d'améliorer la sélectivité d'adsorption de l'azote contenu dans un mélange gazeux, tel l'air. Les zéolithes échangées au lithium ont cependant pour principal inconvénient d'être d'un coût élevé. Ce coût peut aller jusqu'à quatre fois celui d'une zéolithe classique. De ce fait, l'utilisation de ces zéolithes dans un dispositif PSA classique augmente considérablement le coût de l'investissement.

A cet égard, on peut par exemple se référer au brevet US-A-5.268.023 qui stipule effectivement que des zéolithes échangées au lithium avec un taux d'échange supérieur à 88 % présentent un coût de fabrication trop élevé. Ce coût est principalement lié aux grandes quantités de sels de lithium nécessaires en vue de les préparer; ces sels de lithium étant eux-mêmes très chers. Ce brevet propose alors la mise en oeuvre de zéolithes X au lithium échangées à des taux compris entre 70 et 88 %, ces zéolithes présentant un rapport Si/Al voisin de 1. Toutefois, la préparation de telles zéolithes requiert en fait quasiment la même quantité en sels de lithium que celle nécessaire pour préparer les zéolithes selon, par exemple, la demande de brevet EP-A-297.542. En effet, les ions lithium sont associés aux unités tétrahédriques AlO₂ constitutives de la zéolithe. Or, plus le rapport Si/Al est faible, plus la quantité d'unités tétrahédriques AlO₂ dans la zéolithe, est grande. De ce fait, la quantité de sels requis pour atteindre un taux d'échange donné est d'autant plus élevée que le rapport Si/Al est faible.

En vue de rendre acceptable le coût des zéolithes échangées au lithium, il a aussi été proposé dans la demande de brevet EP-A-461.478 de les mettre en oeuvre dans un procédé PSA particulier, en vue de la séparation de l'azote de l'air, et récupération de l'oxygène. Selon ce procédé, le rapport entre la pression haute et la pression basse de cycle doit être compris entre 1,4:1 et 4:1. Ainsi, il est possible de diminuer la consommation énergétique requise pour réaliser les phases d'adsorption. L'économie énergétique ainsi réalisée est censée compenser le coût des zéolithes échangées au lithium.

Cependant, ce procédé nécessite la mise en oeuvre d'une masse d'adsorbant pouvant être jusqu'à deux fois supérieure à celle requise dans un procédé PSA où les rapports des pressions haute et basse sont en dehors du domaine préconisé par EP-A-461.478.

La masse d'adsorbant étant constituée de zéolithes échangées au lithium, on comprend que le coût de l'investissement global du dispositif PSA pour la mise en oeuvre de ce procédé est très élevé et qu'il ne peut être compensé par l'économie en énergie qu'après un temps de fonctionnement très long.

De plus, le domaine du rapport des pressions de 1,4:1 à 4:1 ne peut être appliqué directement sur un dispositif PSA classique, où les pompes de compression notamment, sont adaptées à des rapports de pressions situés en dehors de ce domaine. Il convient alors de modifier notamment les pompes de compression d'un dispositif PSA classique pour la mise en oeuvre du procédé selon EP-A-461.478.

Il apparaît que la mise en oeuvre dans un procédé PSA de zéolithes échangées au lithium n'a pas encore pu être réalisée sans grever de manière importante le coût de l'investissement du dispositif PSA global.

Les demandes de brevet français 91.11545 et 92.04487 au nom de la Demanderesse décrivent de nouveaux procédés et dispositifs PSA selon lesquels la masse d'adsorbant n'est pas agencée dans des bidons mais dans un adsorbeur rotatif. Dans le cadre de la présente invention, on entend par "adsorbeur rotatif", un dispositif rotatif comprenant au moins un matériau adsorbant agencé en une pluralité de masses sectorielles autour et solidaires d'un arbre-support rotatif autour d'un axe vertical.

En vue de la séparation des gaz d'un mélange de gaz au moyen d'un adsorbeur rotatif, on fait circuler le mélange de gaz radialement au travers de la masse d'adsorbant qui se déplace en rotation à une vitesse déterminée. A chaque fois que ladite masse effectue une rotation complète, elle est successivement soumise aux différentes phases d'un procédé PSA tel que mentionné ci-dessus.

De tels adsorbeurs rotatifs ainsi que leur mise en oeuvre pour la séparation des gaz d'un mélange gazeux, sont décrits en détail dans les demandes de brevets français citées plus haut, dont les enseignements sont entièrement intégrés ici pour référence.

Les adsorbants utilisés jusqu'à présent dans ce type d'adsorbants rotatifs sont ceux mis en oeuvre dans les procédés PSA classiques. Ces adsorbants sont donc essentiellement des zéolithes 5A, 13X et 10X ou mordénites.

Les inventeurs ont constaté que des adsorbeurs rotatifs pouvaient permettre une augmentation de la productivité par rapport à un dispositif PSA classique, la productivité étant exprimée en Nm3 de gaz produit par heure et par m3 d'adsorbant (Nm3/h/m3); (un Nm3 étant un m3 de gaz mesuré à 0°C et à la pression atmosphérique), mais qu'ils avaient cependant pour inconvénient de conduire à une diminution du rendement (exprimé en volume de gaz produit par rapport au volume du mélange gazeux traité).

Un premier objet de l'invention consiste en un procédé PSA pouvant être mis en oeuvre au moyen de zéolithes échangées au lithium sans entraîner une augmentation rédhibitoire du coût global de l'investissement.

Un deuxième objet de l'invention consiste en la mise en oeuvre de zéolithes échangées au lithium dans un procédé PSA au moyen d'un dispositif PSA qu'il n'est pas nécessaire de modifier.

Un troisième objet de l'invention consiste en un procédé PSA permettant une productivité et un rendement améliorés.

La présente invention consiste alors en un procédé PSA de séparation d'azote d'un mélange gazeux contenant de l'azote par adsorption sélective de l'azote dudit mélange gazeux dans une masse d'adsorbant, avec variations cycliques de pression comprenant au moins une phase d'adsorption de l'azote réalisée à pression haute et au moins une phase de désorption de l'azote réalisée à pression basse, ledit procédé étant caractérisé en ce que la masse d'adsorbant est agencée dans un adsorbeur rotatif et 50% au moins de la masse d'adsorbant est constituée d'une zéolithe échangée au lithium à plus de 50 %.

D'autres caractéristiques et avantages de la présente invention ressortiront de la description suivante.

Les zéolithes utilisées dans le cadre de la présente invention peuvent être des chabazites, des mordénites, des zéolithes A, X ou Y. De préférence, ces zéolithes sont des faujasites synthétiques ou naturelles dont le rapport molaire Si/Al est compris entre 1 et 10, de préférence compris entre 1 et 4. Avantageusement, la faujasite synthétique ou naturelle consiste en une zéolithe X, soit une zéolite dont le rapport molaire Si/Al est compris entre 1 et 1,5, de préférence compris entre 1 et 1,25.

Le taux d'échange au lithium des zéolithes mises en oeuvre dans le cadre du procédé de l'invention est de préférence supérieur à 70 %, plus préférentiellement supérieur à 80 %, et encore plus préférentiellement supérieur à 85 %. Le taux d'échange peut atteindre 100 %. Une zéolithe tout particulièrement préférée consiste en une zéolithe X dont le rapport Si/AI est compris entre 1 et 1,25, le taux d'échange au lithium de cette zéolithe étant supérieur à 80 % et de préférence supérieur à 95 %. Les procédés de préparation de ces zéolithes sont, par exemple, décrits dans les brevets US-A-5.268.023, US-A-3.140.933 ou dans la demande de brevet EP-A-297.542.

Le procédé de l'invention peut être encore mis en oeuvre avec des zéolithes échangées au lithium selon un taux d'échange compris entre 50 et 95 % et échangées également avec des cations divalents, le taux d'échange en ces cations divalents pouvant être compris entre 5 et 50 %. Ces cations divalents peuvent être choisis dans le groupe constitué par le calcium, le magnésium, le baryum, le strontium, le cobalt, le cuivre, le chrome, le fer, le manganèse, le nickel, le zinc et des mélanges de ces cations.

La préparation des zéolithes échangées à la fois par du lithium et au moins un cation divalent est décrit dans la demande de brevet EP-A-591.919 et dans le brevet US-A-5.174.979.

La masse d'adsorbant est préférentiellement constituée par plus de 70 % en poids, de préférence plus de 90 % en poids par une zéolithe échangée au moins par du lithium, la masse d'adsorbant restante étant constituée par des adsorbants classiques tels des zéolithes 5A, 13X et 10X ou des mordénites. Toutefois, selon un mode de réalisation tout particulièrement avantageux, la masse d'adsorbant est constituée à 100 % par des zéolithes échangées au lithium.

La pression haute de cycle mise en oeuvre dans le cas du procédé selon l'invention est habituellement comprise entre 90 et 300 KPa, de préférence, elle est comprise entre 100 et 150 KPa. La pression basse de cycle est habituellement comprise entre 10 et 70 KPa, de préférence, elle est comprise entre 25 et 40.

Le procédé selon l'invention est plus particulièrement adapté à la séparation d'azote d'un mélange de gaz contenant de l'azote et un gaz moins polaire que l'azote, essentiellement l'oxygène.

Les exemples ci-dessous ont pour but d'illustrer la présente invention.

### Exemple 1 (non conforme à l'invention)

On met en oeuvre une zéolithe 5A dans un dispositif PSA classique, c'est-à-dire un dispositif où les masses d'adsorbants sont agencées dans une pluralité de bidons. La zéolithe 5A mise en oeuvre a une capacité d'adsorption de l'azote à 1 bar de 12 Ncm³/g et une capacité d'adsorption de l'oxygène à 1 bar de 4 Ncm³/g.

Le cycle PSA utilisé est un cycle à trois étapes comprenant une étape d'adsorption (étape de production) à 1,1 bar, une étape de désorption (étape de décompression) à contre-courant jusqu'à 0,25 bar et une étape de recompression par de l'oxygène à contre-courant.

L'oxygène produit est pur à 90 %. La zéolithe 5A permet dans ces conditions une productivité de 15 Nm³/h/m³, et un rendement de 50 %.

### Exemple 2 (non conforme à l'invention):

On reproduit l'exemple 1 mais en substituant la zéolithe 5A par une zéolithe X échangée au lithium à 95 %, présentant les caractéristiques suivantes:
- rapport molaire : Si/Al = 1,
- sélectivité oxygène/azote = 7,
- capacité d'adsorption de l'azote à 1 bar = 17 Ncm³/g,
- capacité d'adsorption de l'oxygène à 1 bar = 2,5 Ncm³/g.

Dans ces conditions, la productivité est de 18,5 Nm³/h/m³ et le rendement de 61,5 %.

Les résultats des exemples 1 et 2 montrent qu'une zéolithe échangée au lithium permet, dans un dispositif PSA classique, un gain de productivité de 23 %.

La part de l'investissement de l'adsorbant dans un tel dispositif PSA classique est de 10 à 30 % selon la taille du dispositif (et donc la masse d'adsorbant qu'il contient). Le gain de productivité est insuffisant pour compenser le coût de la zéolithe X au lithium qui est deux fois celui d'une zéolithe 5A dans un tel dispositif PSA classique.

### Exemple 3 (non conforme à l'invention):

On met en oeuvre un adsorbeur rotatif du type de celui décrit dans la demande de brevet français N° 91.11545.

Le cycle mis en oeuvre comporte une étape d'adsorption effectuée à une pression de 1,2 bar et une étape de désorption effectuée à 0,25 bar.

L'adsorbant est constitué d'une zéolithe telle que définie dans l'exemple 1.

Ce dispositif, lorsqu'il est mis en oeuvre pour préparer de l'oxygène de pureté 90 %, permet l'obtention d'une productivité de 130 Nm³/h/m³ et un rendement en oxygène de 45 %.

### Exemple 4 (conforme à l'invention):

On reproduit l'exemple 3 en substituant la zéolithe 5A par une zéolithe au lithium selon l'exemple 2. En vue de la préparation d'oxygène de pureté 90 %, on obtient une productivité de 170 Nm³/h/m³ et un rendement de 60 %.

Les résultats des exemples 3 et 4 montrent qu'une zéolithe échangée au lithium permet, dans un adsorbeur rotatif, un gain de productivité de 31 %.

Un tel gain de productivité est tout à fait inattendu par rapport aux résultats que l'on pouvait escompter au regard des exemples 1 et 2, mettant en oeuvre un dispositif PSA classique. Mais, de plus, la part du coût de l'adsorbant dans un adsorbeur rotatif est de 1 à 3 %. Le gain de productivité compense ici largement le coût additionnel de la zéolithe échangée au lithium.

## Revendications

1. Procédé PSA de séparation d'azote d'un mélange gazeux contenant de l'azote par adsorption sélective de l'azote dudit mélange gazeux dans une masse d'adsorbant, avec variations cycliques de pression comprenant au moins une phase d'adsorption de l'azote réalisée à pression haute et au moins une phase de désorption de l'azote réalisée à pression basse, ledit procédé étant caractérisé en ce que la masse d'adsorbant est agencée dans un adsorbeur rotatif et 50 % au moins de la masse d'adsorbant est constituée d'une zéolithe échangée au lithium à plus de 50 %.

2. Procédé selon la revendication 1, caractérisé en ce que la zéolithe est une faujasite synthétique ou naturelle dont le rapport molaire Si/Al est compris entre 1 et 10, de préférence compris entre 1 et 5.

3. Procédé selon l'une des revendications 1 et 2, caractérisé en ce que la zéolithe est une zèolithe X dont le rapport molaire Si/Al est compris entre 1 et 1,5, de préférence compris entre 1 et 1,25.

4. Procédé selon l'une des revendications 1 à 3, caractérisé en ce que la zéolithe est échangée au lithium à plus de 70 %, de préférence à plus de 80 % et plus préférentiellement à plus de 85 %.

5. Procédé selon l'une des revendications 1 à 4, caractérisé en ce que la zéolithe est une zéolithe X dont le rapport molaire Si/Al est compris entre 1 et 1,25, ladite zéolithe étant échangée au lithium à plus de 80 %, de préférence à plus de 95 %.

6. Procédé selon l'une des revendications 1 à 4, caractérisé en ce que la zéolithe est échangée par du lithium à un taux n'excédant pas 95 % et par un cation divalent choisi dans le groupe constitué par le calcium, le magnésium, le baryum, le strontium, le cobalt, le cuivre, le chrome, le fer, le manganèse, le nickel et le zinc, le taux d'échange en le cation divalent étant compris entre 5 et 50 %.

7. Procédé selon l'une des revendications 1 à 6, caractérisé en ce que 100 % de la masse d'adsorbant est constituée par une zéolithe échangée au lithium.

8. Procédé selon l'une des revendications 1 à 7, caractérisé en ce que la pression haute est comprise entre 90 et 300 KPa, de préférence comprise entre 100 et 150 KPa, la pression basse est comprise entre 10 et 70 KPa, de préférence comprise entre 25 et 40 KPa.

9. Procédé selon l'une des revendications 1 à 8, caractérisé en ce que le mélange gazeux contenant l'azote est l'air, et on sépare l'azote de l'oxygène de l'air.

## Claims

1. PSA process for the separation of nitrogen from a gas mixture comprising nitrogen by selective adsorption of the nitrogen of the said gas mixture in an adsorbent mass with cyclical pressure variations comprising at least one step of adsorption of the nitrogen carried out at high pressure and at least one step of desorption of the nitrogen carried out at low pressure, the said process being characterized in that the adsorbent mass is positioned in a rotary adsorber and at least 50% of the adsorbent mass is composed of a zeolite exchanged with lithium to more than 50%.

2. Process according to Claim 1, characterized in that the zeolite is a synthetic or natural faujasite, the Si/Al molar ratio of which is between 1 and 10, preferably between 1 and 5.

3. Process according to either of Claims 1 and 2, characterized in that the zeolite is a zeolite X, the Si/Al molar ratio of which is between 1 and 1.5, preferably between 1 and 1.25.

4. Process according to one of Claims 1 to 3, characterized in that the zeolite is exchanged with lithium to more than 70%, preferably to more than 80% and more preferably to more than 85%.

5. Process according to one of Claims 1 to 4, characterized in that the zeolite is a zeolite X, the Si/Al molar ratio of which is between 1 and 1.25, the said zeolite being exchanged with lithium to more than 80%, preferably to more than 95%.

6. Process according to one of Claims 1 to 4, characterized in that the zeolite is exchanged with lithium to a degree not exceeding 95% and with a divalent cation chosen from the group consisting of calcium, magnesium, barium, strontium, cobalt, copper, chromium, iron, manganese, nickel and zinc, the degree of exchange as the divalent cation being between 5 and 50%.

7. Process according to one of Claims 1 to 6, characterized in that 100% of the adsorbent mass is composed of a lithium-exchanged zeolite.

8. Process according to one of Claims 1 to 7, characterized in that the high pressure is between 90 and 300 kPa, preferably between 100 and 150 kPa, and the low pressure is between 10 and 70 kPa, preferably between 25 and 40 kPa.

9. Process according to one of Claims 1 to 8, characterized in that the gas mixture comprising the nitrogen is air and the nitrogen is separated from the oxygen of the air.

## Patentansprüche

1. Druckwechseladsorptionsverfahren zur Abtrennung von Stickstoff aus einem stickstoffhaltigen Gasgemisch durch selektive Adsorption des Stickstoffs aus dem Gasgemisch in einer Adsorptionsmittelmasse unter zyklischen Druckvariationen mit mindestens einer bei hohem Druck durchgeführten Stickstoffadsorptionsphase und mindestens einer bei niedrigem Druck durchgeführten Stickstoffdesorptionsphase, dadurch gekennzeichnet, daß die Adsorptionsmittelmasse in einem rotierenden Adsorber angeordnet ist und die Adsorptionsmittelmasse zu mindestens 50% aus einem zumehr als 50% mit Lithium ausgetauschten Zeolith besteht.

2. Verfahren nach Anspruch 1, dadurch gekennzeichnet, daß man als Zeolith einen synthetischen oder natürlichen Faujasit mit einem Si/Al-Molverhaltnis zwischen 1 und 10, vorzugsweise zwischen 1 und 5, einsetzt.

3. Verfahren nach Anspruch 1 oder 2, dadurch gekennzeichnet, daß man als Zeolith einen X-Zeolith mit einem Si/Al-Molverhältnis zwischen 1 und 1,5, vorzugsweise zwischen 1 und 1,25, einsetzt.

4. Verfahren nach einem der Ansprüche 1 bis 3, dadurch gekennzeichnet, daß man einen Zeolith einsetzt, der zu mehr als 70%, bevorzugt zu mehr als 80% und besonders bevorzugt zu mehr als 85%, mit Lithium ausgetauscht ist.

5. Verfahren nach einem der Ansprüche 1 bis 4, dadurch gekennzeichnet, daß man als Zeolith einen zu mehr als 80%, vorzugsweise zu mehr als 95%, mit Lithium ausgetauschten X-Zeolith mit einem Si/Al-Molverhältnis zwischen 1 und 1,25 einsetzt.

6. Verfahren nach einem der Ansprüche 1 bis 4, dadurch gekennzeichnet, daß man einen Zeolith einsetzt, der zu höchstens 95% mit Lithium und zu 5 bis 50% mit einem zweiwertigen Kation aus der Gruppe bestehend aus Calcium, Magnesium, Barium, Strontium, Cobalt, Kupfer, Chrom, Eisen, Mangan, Nickel und Zink ausgetauscht ist.

7. Verfahren nach einem der Ansprüche 1 bis 6, dadurch gekennzeichnet, daß die Adsorptionsmittelmasse zu 100% aus einem mit Lithium ausgetauschten Zeolith besteht.

8. Verfahren nach einem der Ansprüche 1 bis 7, dadurch gekennzeichnet, daß man bei einem hohen Druck zwischen 90 und 300 KPa, vorzugsweise zwischen 100 und 150 KPa, und bei einem niedrigen Druck zwischen 10 und 70 KPa, vorzugsweise zwischen 25 und 40 KPa, arbeitet.

9. Verfahren nach einem der Ansprüche 1 bis 8, dadurch gekennzeichnet, daß man als stickstoffhaltiges Gasgemisch Luft einsetzt und den Stickstoff vom Sauerstoff der Luft abtrennt.
